# EUROPÄISCHE PATENTANMELDUNG

(11) **EP 2 455 827 A1**
(43) Veröffentlichungstag der Anmeldung: **23.05.2012**
(21) Anmeldenummer: 10191866.2
(22) Anmeldetag: 19.11.2010
(51) Int. Cl.: G05B 19/042

(54) **Feldgerät mit einem Energiesparmodus, der über jede der zwei Schnittstellen des Feldgerätes aktiviert und deaktiviert werden kann**

(71) Anmelder: SIEMENS AKTIENGESELLSCHAFT, 80333 München (DE)
(72) Erfinder: Fritsch, Andreas, 92245 Kümmersbruck (DE); Gruber, Stefan, 92245 Kümmersbruck (DE); Koller, Josef, 93133 Burglengenfeld (DE); Schubert, Ralf, 92272 Freudenberg (DE); Spindler, Konrad, 92289 Ursensollen (DE)

(57) **Zusammenfassung**

Die Erfindung betrifft ein elektrisches Schaltgerät (1), welches ein erstes Eingabemittel (2), zum Anschließen einer übergeordneten Steuerung (4), und ein zweites Eingabemittel (3) umfasst. Um ein verbessertes elektrisches Schaltgerät (1) bereitzustellen kann das elektrische Schaltgerät (1) einen Betriebsmodus und einen Energiesparmodus einnehmen, wobei der Energiesparmodus sowohl über das erste Eingabemittel (2) durch die übergeordnete Steuerung (4) als auch mittels des zweiten Eingabemittels (3) aktivierbar und deaktivierbar ist.

## Beschreibung

Die Erfindung betrifft ein elektrisches Schaltgerät. Das elektrische Schaltgerät kommt insbesondere innerhalb der industriellen Automatisierungstechnik zum Einsatz und dient dem Steuern eines mit ihm verbundenen Verbrauchers. Ein Verbraucher ist beispielsweise ein Motor. Das elektrische Schaltgerät kann beispielsweise ein Motorstarter oder Motorsteuergerät sein. Das elektrische Schaltgerät ist üblicherweise mit einer übergeordneten Steuerung verbunden, so dass das elektrische Schaltgerät und letztendlich der Verbraucher über die übergeordneten Steuerung gesteuert werden kann. Eine derartige Verbindung zwischen dem elektrischen Schaltgerät und der Steuerung kann beispielsweise eine Punkt zu Punkt Verbindung (IO-Link) oder eine Busverbindung (PROFIBUS, PROFINET, ASI, etc.) sein.

Ist das Bussystem beispielsweise ein PROFINET-Bussystem so kann die übergeordnete Steuerung mit dem elektrischen Schaltgerät mittels PROFINET kommunizieren, so dass die Steuerung via PROFINET das Schaltgerät und letztendlich den mit dem elektrischen Schaltgerät verbundenen Verbraucher steuern kann. Derartige Schaltgeräte, welche über PROFINET angesteuert werden, können ferner PROFIenergy kompatibel sein. PROFIenergy ist ein Profil für das Energiemanagement in Produktionsanlagen. PROFIenergy setzt auf dem Kommunikationsprotokoll PROFINET auf. Mittels PROFIenergy kann der Energieverbrauch von Automatisierungsequipment in der Fertigung (wie z.B. Roboter-Montagezellen, Laserschneideanlagen und Teilsystemen wie Lackieranlagen) gesteuert werden. Die Steuerung des Energieverbrauchs (z.B. des elektrischen Schaltgerätes selbst) erfolgt über offene und standardisierte Kommandos, die auf geplante und ungeplante Unterbrechungen in der Fertigung angewandt werden.

Schaltgeräte, welche über PROFIenergy Kommandos angesprochen werden, können somit einen Betriebsmodus und einen Energiesparmodus einnehmen. Innerhalb des Betriebsmodus, welcher den "Arbeitsbetrieb" des Schaltgerätes darstellt, kann das elektrische Schaltgerät mittels des Bussystems oder einer lokalen Steuerung vor Ort ("Handsteuerung") gesteuert werden. Ist der Verbraucher beispielsweise ein Motor, so kann insbesondere der Motor ein und ausgeschaltet werden. Eine lokale Steuerung vor Ort erfolgt beispielsweise über Tasten am Schaltgerät oder über ein mit dem Schaltgerät verbundenes Gerät (z.B. Bediengerät, Laptop, etc.). Das Schaltgerät kann somit während des Betriebsmodus zentral über das Bussystem oder mittels der "Handsteuerung" vor Ort gesteuert werden. Innerhalb des Energiesparmodus, welcher einen energetisch verbesserten Zustand des Schaltgerätes darstellt, kann das elektrische Schaltgerät energiesparende Zustände einnehmen. Mittels PROFIenergy können Energiesparmaßnahmen über standardisierte, herstellerunabhängige Kommandos eingeleitet werden. Gemäß PROFIenergy kann der Energiesparmodus am elektrischen Schaltgerät jedoch lediglich über das Bussystem aktiviert und deaktiviert werden.

Möchte ein Anwender beispielsweise ein sich im Energiesparmodus befindendes Schaltgerät für Wartungszwecke, einen Testbetrieb oder einen Notlauf manuell über die Handsteuerung steuern, so muss gemäß PROFIenergy über das Bussystem der Energiesparmodus am Schaltgerät deaktiviert werden. Eine gezielte Wartung, ein lokaler Testbetrieb oder Notlaufszenarien können somit bei sich im Energiesparmodus befindlichen Anlagenteilen, welche mehrere elektrische Schaltgeräte umfassen, nicht durchgeführt werden. Will ein Anwender diese Problematik umgehen, muss er gezielt Maßnahmen in seiner Anlagensteuerung integrieren, die es erlauben einzelne Teile der Anlage (z.B. ein elektrisches Schaltgerät) aus dem übergeordneten Energiesparmodus herauszulösen. Dies hat für den Anwender eine Reihe von Nachteilen: erheblichter Entwicklungs- und Implementierungsaufwand, komplexere Abhängigkeiten und erhöhten Speicherbedarf für sein Anwenderprogramm.

Es ist Aufgabe der vorliegenden Erfindung ein verbessertes elektrisches Schaltgerät bereitzustellen.

Diese Aufgabe wird gelöst durch eine Vorrichtung gemäß Anspruch 1, d.h. durch ein elektrisches Schaltgerät, welches ein erstes Eingabemittel, zum Anschließen einer übergeordneten Steuerung, und ein zweites Eingabemittel umfasst, wobei das elektrische Schaltgerät einen Betriebsmodus und einen Energiesparmodus einnehmen kann, wobei der Energiesparmodus sowohl über das erste Eingabemittel durch die übergeordnete Steuerung als auch mittels des zweiten Eingabemittels aktivierbar und deaktivierbar ist.

Vorteilhafte Weiterbildungen der Erfindung sind in den abhängigen Ansprüchen 2 bis 14 angegeben.

Vorzugsweise ist das elektrische Schaltgerät dazu ausgebildet, dass bei einem Übergang vom Betriebsmodus in den Energiesparmodus mindestens eine Komponente des elektrischen Schaltgeräts oder der mit dem elektrischen Schaltgerät verbundene Verbraucher abgeschaltet wird. Das elektrische Schaltgerät kann vorzugsweise während des Energiesparmodus weiterhin Steuerkommandos über das erste und zweite Eingabemittel empfangen und verarbeiten.

Dadurch, dass das elektrische Schaltgerät den Betriebsmodus und den Energiesparmodus einnehmen kann, kann der Energieverbrauch seitens des Schaltgerätes oder dessen Verbrauchers beeinflusst werden. Ist beispielsweise für einen durch das elektrische Schaltgerät gesteuerten Verbraucher der Betriebsmodus (Arbeitsbetrieb) für eine absehbare Dauer nicht notwendig, so kann der Energiesparmodus am elektrischen Schaltgerät aktiviert werden, so dass energiesparende Maßnahmen eingeleitet werden können. Zum Einleiten des Energiesparmodus kann der Anwender entweder mittels des ersten Eingabemittels und somit über die übergeordnete Steuerung oder mittels des zweiten Eingabemittels den Energiesparmodus am elektrischen Schaltgerät aktivieren. Das Deaktivieren des Energiesparmodus kann ebenso entweder mittels des ersten Eingabemittels oder des zweiten Eingabemittels erfolgen. Das Aktivieren sowie Deaktivieren erfolgt vorzugsweise über wenige Eingabeschritte, insbesondere über lediglich einen Eingabeschritt. Ein manuelles, zeitaufwändiges Schalten des elektrischen Schaltgerätes kann somit entfallen. Dies ermöglicht, dass auch in kurzen Pausen der Energiesparmodus leicht aktiviert werden kann und somit Energie sowie Betriebskosten gespart werden können.

Einem Anwender steht es somit offen, über welches Eingabemittel er den Energiesparmodus aktivieren oder deaktivieren möchte. Befindet sich der Anwender vor Ort, so kann er über das zweite Eingabemittel direkt den Energiesparmodus am elektrischen Schaltgerät aktivieren oder deaktivieren. Mittels der übergeordneten Steuerung kann der Anwender den Energiesparmodus des elektrischen Schaltgerätes oder sogar mehrerer elektrischer Schaltgeräte aktivieren oder deaktivieren. Durch das zweite Eingabemittel kann somit ein gezieltes aktivieren oder deaktivieren des Energiesparmodus eines elektrischen Schaltgerätes erfolgen, ohne dass die übergeordnete Steuerung verwendet werden muss. Werden beispielsweise mittels der übergeordneten Steuerung mehrere elektrische Schaltgeräte in den Energiesparmodus versetzt, so kann mittels des zweiten Eingabemittels gezielt lediglich bei einem elektrischen Schaltgerät vor Ort der Energiesparmodus deaktiviert werden, ohne dass die restlichen sich im Energiesparmodus befindenden Schaltgeräte den Energiesparmodus deaktivieren müssen. Dies stellt eine erhebliche Verbesserung hinsichtlich der Bedienbarkeit und Steuerung des elektrischen Schaltgerätes dar.

Mittels des ersten und zweiten Eingabemittels kann insbesondere jeweils derselbe Energiesparmodus aktiviert und deaktiviert werden. Vorzugsweise ist die übergeordnete Steuerung eine Masterbaugruppe und das erste Schaltgerät ein Slave.

In einer vorteilhaften Ausführungsform der vorliegenden Erfindung ist das erste Eingabemittel ein Busanschluss, so dass die übergeordnete Steuerung, insbesondere eine Speicherprogrammierbare Steuerung, über einen Bus mit dem elektrischen Schaltgerät verbindbar ist. Der Bus ist insbesondere ein Feldbussystem wie beispielsweise PROFINET, PROFIBUS, ASI. Das erste Eingabemittel ist somit mit einem Bussystem verbindbar, so dass mittels des Bussystems das elektrische Schaltgerät gesteuert werden kann. Insbesondere ist über das Bussystem der Energiesparmodus aktivierbar und deaktivierbar.

In einer weiteren vorteilhaften Ausführungsform der vorliegenden Erfindung ist der Busanschluss ein PROFINET-Bussanschluss und der Energiesparmodus ist mittels eines PROFIenergy Kommandos aktivierbar und deaktivierbar. PROFIenergy ist ein herstellerunabhängiges Kommunikationsprotokoll, über welches insbesondere ein jeweiliger Energiesparmodus schaltbar ist.

In einer weiteren vorteilhaften Ausführungsform der vorliegenden Erfindung umfasst das zweite Eingabemittel ein Bedienelement, über welches der Energiesparmodus aktivierbar und deaktivierbar ist. Das Bedienelement ist vorzugsweise für einen Anwender leicht zugänglich. Das Bedienelement kann beispielsweise ein Betätiger (z.B. Taster oder Drehschalter) oder ein Touchscreen sein, über welchen der Energiesparmodus leicht aktivierbar oder deaktivierbar ist. Das Aktivieren oder Deaktivieren kann vorzugsweise mittels weniger als vier Eingabeschritten erfolgen. Insbesondere kann ein Anwender innerhalb von max. 10 Sekunden den Energiesparmodus herbeiführen. Mittels des Bedienelementes ist eine lokale Steuerung des elektrischen Schaltgerätes direkt vor Ort möglich.

In einer weiteren vorteilhaften Ausführungsform der vorliegenden Erfindung umfasst das zweite Eingabemittel eine Schnittstelle, an welche ein Gerät anschließbar ist, mit welchem der Energiesparmodus aktivierbar und deaktivierbar ist. Über das zweite Eingabemittel kann insbesondere kein Bus angeschlossen werden. Das Gerät kann insbesondere ein Sensor, ein Aktor und/oder ein Bediengerät sein. Bei dem Sensor und/oder Aktor umfasst die Schnittstelle vorzugsweise mindestens einen digitalen Eingang, an welchen der Sensor und/oder Aktor anschließbar ist. Durch ein seitens des elektrischen Schaltgerätes voreingestellten Signal seitens des Sensors und/oder Aktors kann letztendlich der Energiesparmodus aktiviert und/oder deaktiviert werden. Das Bediengerät ist vorzugsweise ein Handbediengerät oder ein Laptop. Hierbei ist die Schnittstelle vorzugsweise derart ausgebildet, dass das Handbediengerät und/oder der Laptop mit der Schnittstelle verbindbar sind, so dass hierüber mit dem elektrischen Schaltgerät kommuniziert werden kann. Bei dem Laptop kann insbesondere mittels eines Engineering Tools (via Software) das elektrische Schaltgerät gesteuert und insbesondere der Energiesparmodus aktiviert oder deaktiviert werden. Ebenso ist es denkbar, dass die Schnittstelle eine Kommunikation mit einem mobilen Telekommunikationsmittel (z.B. Handy, Smartphone, PDA) ermöglicht, so dass hierüber der Energiesparmodus aktiviert und deaktiviert werden kann. Mittels der Schnittstelle ist eine lokale Steuerung des elektrischen Schaltgerätes durch Anbindung eines Gerätes (z.B. über eine Punkt zu Punkt Verbindung) vor Ort möglich.

In einer weiteren vorteilhaften Ausführungsform der vorliegenden Erfindung ist das Gerät ein Sensor und das zweite Eingabemittel ein digitaler Eingang, an welchen der Sensor anschließbar ist.

In einer weiteren vorteilhaften Ausführungsform der vorliegenden Erfindung ist das elektrische Schaltgerät dazu ausgebildet, dass bei einem Übergang vom Betriebsmodus in den Energiesparmodus mindestens eine Komponente des elektrischen Schaltgeräts oder ein mit dem elektrischen Schaltgerät verbundener Verbraucher abgeschaltet wird. Bei der Aktivierung des Energiesparmodus werden im Vergleich zum Betriebsmodus energiereduzierende Maßnahmen durchführt. Vorzugsweise wird bei der Deaktivierung des Energiesparmodus das Schaltgerät automatisch in den Betriebsmodus versetzt. Während des Energiesparmodus kann insbesondere weiterhin zwischen der übergeordneten Steuerung und dem elektrischen Schaltgerät kommuniziert werden.

Der Energiesparmodus wird vorzugsweise durch ein einzelnes über das erste oder zweite Eingabemittel eingehendes Steuerkommando aktiviert oder deaktiviert. Es sind vorzugsweise nicht mehrere Steuerkommandos erforderlich. Der Energiesparmodus (bzw. eine jeweilige Energiesparvariante) kann vorzugsweise direkt seitens der Steuerung, des Bedienelementes und/oder des Gerätes ausgewählt werden. Vorzugsweise weist die Steuerung, des Bedienelemente und/oder des Geräte bzw. deren Programmoberfläche ein Bedienfeld auf, welches gezielt den Energiesparmodus bzw. die einzelnen Energiesparvarianten aktivieren oder deaktivieren kann.

In einer weiteren vorteilhaften Ausführungsform der vorliegenden Erfindung ist das elektrische Schaltgerät ein Motorsteuergerät oder ein Motorstarter. Der mit dem Motorstarter oder Motorsteuergerät verbundenen Verbraucher ist insbesondere ein Motor.

In einer weiteren vorteilhaften Ausführungsform der vorliegenden Erfindung umfasst der Energiesparmodus mindestens zwei Energiesparvarianten, welche jeweils mittels des ersten und zweiten Eingabemittels aktivierbar und deaktivierbar sind. Mittels des ersten und zweiten Eingabemittels können somit unterschiedliche Energiesparvarianten angesteuert werden. Es kann beispielsweise in Abhängigkeit der angestrebten Dauer des Energiesparmodus gezielt eine Energiesparvariante ausgewählt werden. In einer Energiesparvariante wird beispielsweise der mit dem elektrischen Schaltgerät verbundene Verbraucher abgeschaltet und in einer weiteren Energiesparvariante werden zusätzliche Komponenten des Schaltgerätes deaktiviert. Auf diese Weise kann ein äußerst energieeffizienter Betrieb einer Anlage, welche das elektrische Schaltgerät umfasst, erfolgen. Ebenso ist es denkbar, dass die jeweilige Energiesparvariante die Dauer angibt, in welcher der Energiesparmodus aktiv sein soll.

In einer weiteren vorteilhaften Ausführungsform der vorliegenden Erfindung sind die mindestens zwei Energiesparvarianten kommunikationsunabhängig im Schaltgerät implementiert.

Insbesondere erfolgen seitens des ersten und zweiten Eingabemittels die gleichen Steuerschritte innerhalb des Schaltgerätes bezüglich der jeweiligen Energiesparvariante. Die einzelnen Energiesparvarianten sind sowohl über das erste als auch über das zweite Eingabemittel ansteuerbar und somit aktivierbar und deaktivierbar.

In einer weiteren vorteilhaften Ausführungsform der vorliegenden Erfindung umfasst das elektrische Schaltgerät eine Verarbeitungseinheit, welche dazu ausgebildet ist, Steuerkommandos des ersten und zweiten Eingabemittels zu verarbeiten und das elektrische Schaltgerät innerhalb des Betriebsmodus und des Energiesparmodus zu steuern. Vorzugsweise sind von der Verarbeitungseinheit ausgegebene Steuerbefehle zur Einleitung eines gleichen Energiesparmodus unabhängig von der Quelle der Eingabe (erstes oder zweite Eingabemittel) dieselben Steuerbefehle. Über das erste und zweite Eingabemittel kann somit gezielt der Energiesparmodus und insbesondere die jeweilige Energiesparvariante "ausgewählt" werden, so dass seitens der Verarbeitungseinheit der Energiesparmodus und insbesondere die ausgewählte Energiesparvariante aktiviert und deaktiviert werden kann. Die Verarbeitungseinheit ist insbesondere ein Mikroprozessor.

In einer weiteren vorteilhaften Ausführungsform der vorliegenden Erfindung ist die Verarbeitungseinheit derart ausgebildet, dass bei einem Deaktivieren des Energiesparmodus automatisch der Betriebsmodus herbeigeführt wird.

In einer weiteren vorteilhaften Ausführungsform der vorliegenden Erfindung ist mittels des ersten und zweiten Eingabemittels mindestens ein Messwert des elektrischen Schaltgerätes auslesbar. Insbesondere gibt der Messwert eine physikalische Größe, welche durch das elektrische Schaltgerät gemessen werden kann, wieder. Ein derartiger Messwert kann beispielsweise ein Stromwert, ein Spannungswert, eine Scheinleistung, eine Blindleistung, eine Wirkleistung, eine Phasenverschiebung oder ein maximaler Strom sein.

In einer weiteren vorteilhaften Ausführungsform der vorliegenden Erfindung liegt ein Steuersystem vor, welches ein elektrisches Schaltgerät und eine Steuerung umfasst, wobei die Steuerung mit dem ersten Eingabemittel verbunden ist und mittels der Steuerung sowohl der Betriebsmodus als auch der Energiesparmodus aktivierbar und deaktivierbar ist.

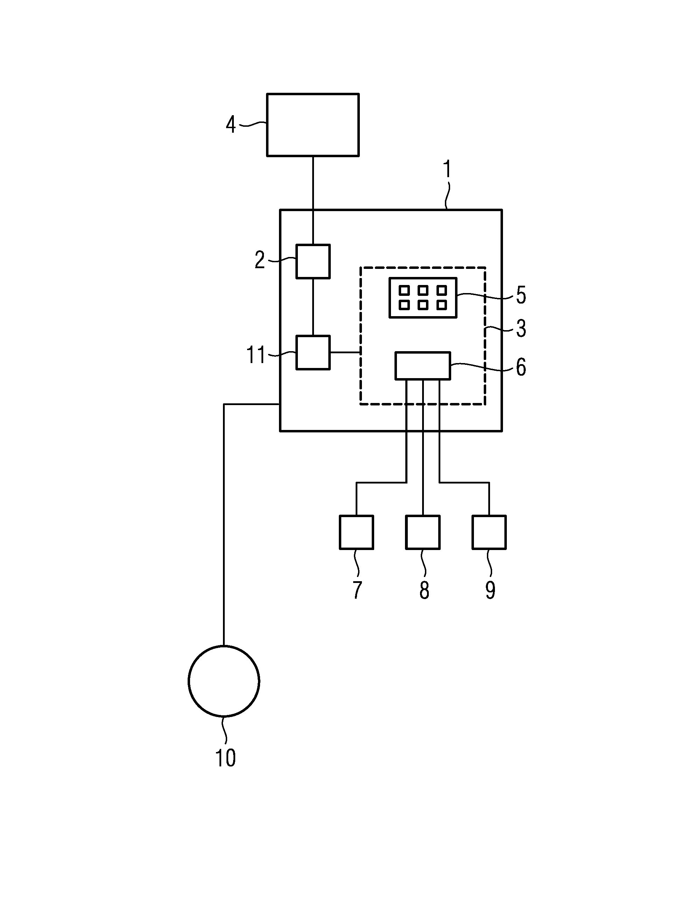

Im Folgenden werden die Erfindung und Ausgestaltungen der Erfindung anhand der in der Figur dargestellten Ausführungsbeispiele näher beschrieben und erläutert. Es zeigt:

Die FIG eine schematische Darstellung eines elektrischen Schaltgerätes.

Die Figur zeigt eine schematische Darstellung eines elektrischen Schaltgerätes 1. Das elektrische Schaltgerät 1 ist hierbei ein Motorstarter, welcher mit einer übergeordneten Steuerung 4 verbunden ist. Die übergeordnete Steuerung kann beispielsweise eine speicherprogrammierbare Steuerung (SPS) sein. Zur Kommunikation mit der übergeordneten Steuerung umfasst das elektrische Schaltgerät 1 ein erstes Eingabemittel 2. Die Kommunikation mit der übergeordneten Steuerung 4 erfolgt in diesem Ausführungsbeispiel mittels PROFINET. Hierfür ist ein PROFINET-Bus mit dem elektrischen Schaltgerät 1, insbesondere mit dem erste Eingabemittel 2, und mit der übergeordneten Steuerung 4 verbunden, so dass über die PROFINET-Verbindung eine Kommunikation zwischen der übergeordneten Steuerung 4 und dem elektrischen Schaltgerät 1 erfolgen kann. Das erste Eingabemittel 2 ermöglicht eine Kommunikation mit der übergeordneten Steuerung 4 und somit eine Steuerung des elektrischen Schaltgerätes mittels eines Bussystem.

Das elektrische Schaltgerät 1 ist ferner mit einem Verbraucher 10, insbesondere einem Motor, verbunden. Das elektrische Schaltgerät 1 kann diesen Verbraucher 10 steuern. Die übergeordnete Steuerung 4 kann ebenso den Verbraucher 10 mittels des elektrischen Schaltgerätes 1 steuern. Hierfür werden über die vorliegende PROFINET-Verbindung Kommandos an das elektrische Schaltgerät 1 gesandt.

Das elektrische Schaltgerät 1 umfasst neben dem ersten Eingabemittel 2 ferner ein zweites Eingabemittel 3 und eine Verarbeitungseinheit 11. Das zweite Eingabemittel 3 ermöglicht eine lokale Steuerung des Schaltgerätes 1 vor Ort. Hierfür umfasst das zweite Eingabegerät 3 ein Bedienelement 5 und/oder eine Schnittstelle 6. In diesem Ausführungsbeispiel umfasst das Schaltgerät sowohl ein Bedienelement 5 als auch eine Schnittstelle 6. Mittels des Bedienelementes 5, welches in diesem Ausführungsbeispiel Bedientasten umfasst, kann der Anwender den Verbraucher 10 unmittelbar vom elektrischen Schaltgerät 1 steuern. Alternativ hierzu kann ein Anwender ebenso ein Gerät 7,8,9 an der Schnittstelle 6 des elektrischen Schaltgerätes 1 anschließen, so dass mittels der angeschlossenen Gerätes 7,8,9 eine Steuerung des elektrischen Schaltgerätes 1 vor Ort erfolgen kann. Das Gerät 7,8,9 kann beispielsweise ein Handbediengerät 8, ein Laptop 9, ein Sensor 7, ein Aktor oder ein mobiles Telekommunikationsmittel sein. In diesem Ausführungsbeispiel sind beispielhaft drei Geräte 7,8,9 mit der Schnittstelle 6 verbunden. Zum Einen ist ein Sensor 7 mit der Schnittstelle 6, vorzugsweise über digitale Eingänge der Schnittstelle 6, verbunden. Ferner ist ein Handbediengerät 8 sowie ein Laptop 9 mit der Schnittstelle 6 verbunden. Die Steuerung des elektrischen Schaltgerätes durch den Laptop 9 erfolgt vorzugsweise mittels eines Engineering Tools. Über das zweite Eingabemittel 3 kann somit ein Anwender vor Ort das elektrische Schaltgerät 1 und hierüber den Verbraucher 10 steuern. Eine gezielte Steuerung vor Ort (Handsteuerung) wird folglich ermöglicht.

Über das erste und zweite Eingabemittel 2,3 kann somit jeweils eine Steuerung ("Bussteuerung" und "Handsteuerung") des elektrischen Schaltgerätes 1 erfolgen. Die über das erste und zweite Eingabemittel 2,3 eingehenden Signale werden durch eine Verarbeitungseinheit 11, insbesondere einem Mikrokontroller ausgewertet. Die Verarbeitungseinheit 11 kann daraufhin entsprechende Steuerbefehle innerhalb des elektrischen Schaltgerätes 1 ausgeben, so dass es zu einer Zustandsänderung innerhalb des elektrischen Schaltgerätes 1 und/oder am Verbraucher 10 kommt.

Das elektrische Schaltgerät 1 weist zum Einen einen Betriebsmodus und zum Anderen einen Energiesparmodus auf. Der Betriebsmodus stellt den Normalbetrieb des elektrischen Schaltgerätes 1 dar. Während des Betriebsmodus sind vorzugsweise alle Funktionen des elektrischen Schaltgerätes 1 verfügbar. Innerhalb des Energiesparmodus weist das elektrische Schaltgerät 1 im Vergleich zum Betriebsmodus einen energetisch verbesserten Zustand auf. Während des Energiesparmodus ist beispielsweise der mit dem elektrischen Schaltgerät 1 verbundene Verbraucher 10 deaktiviert und/oder Hardwarekomponenten des elektrischen Schaltgerätes 1 sind abgeschaltet. Während des Energiesparmodus kommt es jedoch zu keiner vollständigen Abschaltung des elektrischen Schaltgerätes 1. Das elektrische Schaltgerät 1 befindet sich in einer Art Stand-By Betrieb, in welcher das elektrische Schaltgerät 1 weiterhin Befehle, welche über das erste und zweite Eingabemittel an das elektrische Schaltgerät 1 gesandt werden, registriert. Das elektrische Schaltgerät 1 ist sowohl über die übergeordnete Steuerung 4 als auch über mittels der Handsteuerung vor Ort über des zweiten Eingabemittels 3 steuerbar. Das elektrische Schaltgerät 1 kann somit je nach Bedarf über das erste oder zweite Eingabemittel den Energiesparzustand aktivieren oder deaktivieren.

Einem Anwender wird somit die Möglichkeit gegeben den Energiesparmodus neben der Nutzung der übergeordneten Steuerung 4 (mittels der PROFINET-Kommunikation mit PROFIenergy-Protokollrahmen und Kommandos) ebenso auch über die lokale Steuerung vor Ort mittels des zweiten Eingabemittels 3 nutzbar/zugänglich zu machen.

Der Anwender hat dabei die Möglichkeit sich über die am Motorstarter vorhandene Schnittstelle 6 zusätzlich zur Buskommunikation eine lokale Kommunikationsverbindung aufzubauen. Die lokale Kommunikationsverbindung kann beispielsweise als Punkt zu Punkt Verbindung ausgebildet sein. Über diese lokale Kommunikationsverbindung kann z.B. das Handbediengerät 8 oder ein PC-Engineering-Tool angeschlossen werden, in denen Kommandos Bedienen, Beobachten, Aktivierung und Deaktivierung des Energiesparmodus integriert sind.

Der Energiesparmodus im elektrischen Schaltgerät 1 selbst ist kommunikationsunabhängig implementiert, d.h. alle im elektrischen Schaltgerät 1 integrierten Energiesparfunktionen verhalten sich immer gleich, unabhängig davon über welchen Kommunikationskanal (über das erste oder zweite Eingabemittel 3,4) der Anwender das elektrischen Schaltgerät 1 bedient. Insbesondere kann der Energiesparmodus unterschiedliche Energiesparvarianten umfassen, so dass beispielsweise je nach absehbarer Dauer des Energiesparmodus energiesparende Maßnahmen eingeleitet werden.

Der Anwender erhält damit zum Einen die Möglichkeit verschiedene Energiesparvarianten lokal am elektrischen Schaltgerät 1 aktivieren / deaktivieren zu können und zum Anderen diese lokale Aktivierung / Deaktivierung mit der Aktivierung / Deaktivierung über die übergeordnete Steuerung 4 zu kombinieren. D.h. er kann den Energiesparmodus z.B. über die Steuerung 4 aktivieren und lokal über das zweite Eingabemittel 3 wieder deaktivieren oder umgekehrt. Damit werden dem Anwender neue Nutzungsszenarien eröffnet, die es ihm erlauben in seinen Anlagen (Steuersysteme, welche mehrere elektrische Schaltgeräte umfassen) standardisierte Energiesparmaßnahmen (z.B. PROFIenergy-Funktionalität) flexibel über unterschiedliche Kommunikationskanäle durchführen zu können.

Vorzugsweise wird einem Anwender über das zweite Eingabemittel 3 eine gleichwertige Kommunikation mit dem Schaltgerät 1 ermöglicht, wie über das erste Eingabemittel 2. Über das zweite Eingabemittel 3 sind somit vorzugsweise ebenso Messwerte des elektrischen Schaltgeräts 1 auswertbar. Vorzugsweise sind über das zweite Eingabemittel bei einem Anschluss mittels PROFINET ebenso Energiemesswerte gemäß PROFIenergy auslesbar.

Durch die Verwendung des elektrischen Schaltgerätes 1 wird der Anwender in die Lage versetzt die im Schaltgerät 1 implementierten Energiesparmassnahmen (die unterschiedlichen Energiesparvarianten) entweder über die übergeordnete Steuerung 4 (PROFINET-Kommunikation) und/oder die lokale Kommunikation (über das zweite Eingabemittel 3) flexibel nutzen und einsetzen zu können. D.h. er kann z.B. eine Energiesparvariante über die Steuerung 4 aktivieren und lokal mittels des zweiten Eingabemittels 3 wieder deaktivieren oder umgekehrt. Durch diese Kombinierbarkeit beim Zugriff auf die im elektrischen Schaltgerät 1 integrierten Energiesparmassnahmen werden dem Anwender eine Reihe von neuen Nutzungsszenarien eröffnet.

Das elektrische Schaltgerät 1 ist dank des zweiten Eingabemittels 3 auch lokal ohne Kommunikationsanbindung über das erste Eingabemittel 2 nutzbar. Eine lokale Inbetriebnahme und Test von Anlagenteilbereichen (bzgl. Energiesparmaßnahmen) ist somit bereits ohne fertig gestelltes Anwenderprogramm für die Gesamtanlage durchführbar. Der Anwender kann die vom elektrischen Schaltgerät 1 gelieferten und standardisierten Energiemesswerte der PROFIenergy Funktion vorzugsweise nicht nur über die übergeordnete Steuerung 4 sondern auch lokal am Schaltgerät 1 z.B. mittels eines Engineering Tools auslesen, beobachten und ggf. weiterverarbeiten.

Werden mittels der Steuerung 4 mehrere elektrische Schaltgeräte 1 gesteuert, so liegt dank der Bedienbarkeit des elektrischen Schaltgerätes 1 über das erste und zweite Eingabemittel 2,3 eine verbesserte Austauschbarkeit von Komponenten vor.

Im folgenden werden zwei Anwendungsbeispiele für eine kombinierte Nutzung der Aktivierung/Deaktivierung des Energiesparmodus über das erste Eingabemittel 2, und somit über die übergeordnete Steuerung 4, und über das zweite Eingabemittel 3, und somit über die lokale Steuerung vor Ort, aufgeführt.

Schaltgerätetausch bei aktiviertem Energiesparmodus: Hierbei liegt beispielhaft eine größere Anlage mit z.B. 150 elektrischen Schaltgeräten 1 vor, welche jeweils über das erste Eingabemittel 2 mit einer übergeordneten Steuerung 4 verbunden sind und mittels eines Anwenderprogramms der übergeordneten Steuerung 4 steuerbar sind. Befindet sich die Anlage mit ihren 150 elektrischen Schaltgeräten 1 in einem Energiesparmodus, welcher mittels des Anwenderprogramms der übergeordneten Steuerung 4 aktiviert worden ist, würde ein Austausch eines der elektrischen Schaltgeräte 1 der Anlage, z.B. wegen eines Defekts oder einer Wartung, zwangsläufig dazu führen, dass sich das neue elektrische Schaltgerät 1 (der neue Anlagenteilnehmer) nach dem Gerätetausch nicht mehr im Energiesparmodus befindet. Damit sich die gesamte Anlage nach dem Tausch wieder gleichwertig im Energiesparmodus befindet müsste der Anwender über sein Anwenderprogramm gezielt das neue elektrische Schaltgerät 1 in den Energiesparmodus schalten, so dass der Energiesparmodus am neuen elektrischen Schaltgerät 1 aktiviert wird. Das bedeutet konkret Mehraufwand (zeitlich / personell) für den Anwender, da gezielt für diesen getauschten Anlagenteilnehmer in das Anwenderprogramm eingegriffen werden muss. In der Regel wird der Mitarbeiter, der den lokalen Geräteaustausch durchführt (meistens Elektriker, Instandsetzer) nicht die Möglichkeit oder das Wissen haben gezielt in ein übergeordnetes Anwenderprogramm einzugreifen. Aufgrund der vorteilhaften gleichwertigen Nutzung der beiden Kommunikationskanäle mittels des ersten und zweiten Eingabemittels 2,3 (PROFINET-Kommunikation und lokale Steuerung vor Ort) kann in diesem Anwendungsfall nach erfolgtem Schaltgeräteaustausch das neue Schaltgerät 1 direkt mittels des zweiten Eingabemittels 3 (lokale Steuerung vor Ort) in den Energiesparmodus versetzt werden. Damit befindet sich wieder die gesamte Anlage im Energiesparmodus ohne dass der Anwender in sein Anwenderprogramm eingreifen musste.

Inbetriebnahme (Test von Energiesparmodus) einzelner Anlagenteile, welche elektrische Schaltgeräte 1 umfassen, ohne vorhandenes Anwenderprogramm: Werden bei einem Aufbau größerer Anlagen Teilbereiche der Anlage nacheinander in Betrieb genommen, ohne dass zu diesem Zeitpunkt ein vollständiges Anwenderprogramm für die gesamte Anlage existiert, kann bei diesen Teilbereichen der Anlage bereits während der Inbetriebnahme über die lokale Steuerung vor Ort mittels des zweiten Eingabemittels der Energiesparmodus der Schaltgeräte 1 aktiviert und deaktiviert werden, so dass diese z.B. in ihrer Wechselwirkung / Arbeitsweise in den Teilbereichen der Anlage vorab getestet werden können. Der Vorteil für den Anwender liegt darin, dass er Teilbereiche seiner Anlage bezogen auf ihr Energiesparverhalten bereits lange vor der Erstellung / Fertigstellung seines vollständigen Anwenderprogramms unabhängig testen kann.

## Patentansprüche

1. Elektrisches Schaltgerät (1), welches ein erstes Eingabemittel (2), zum Anschließen einer übergeordneten Steuerung (4), und ein zweites Eingabemittel (3) umfasst, wobei das elektrische Schaltgerät (1) einen Betriebsmodus und einen Energiesparmodus einnehmen kann, wobei der Energiesparmodus sowohl über das erste Eingabemittel (2) durch die übergeordnete Steuerung (4) als auch mittels des zweiten Eingabemittels (3) aktivierbar und deaktivierbar ist.

2. Elektrisches Schaltgerät (1) nach Anspruch 1, wobei das erste Eingabemittel (2) ein Busanschluss ist, so dass die übergeordnete Steuerung (4), insbesondere eine Speicherprogrammierbare Steuerung, über einen Bus mit dem elektrischen Schaltgerät (1) verbindbar ist.

3. Elektrisches Schaltgerät (1) nach Anspruch 2, wobei der Busanschluss ein PROFINET-Busanschluss ist und der Energiesparmodus mittels eines PROFIenergy Kommandos aktivierbar und deaktivierbar ist.

4. Elektrisches Schaltgerät (1) nach einem der vorhergehenden Ansprüche, wobei das zweite Eingabemittel (3) ein Bedienelement (5) umfasst, über welches der Energiesparmodus aktivierbar und deaktivierbar ist.

5. Elektrisches Schaltgerät (1) nach einem der vorhergehenden Ansprüche, wobei das zweite Eingabemittel (3) eine Schnittstelle (6) umfasst, an welche ein Gerät (7,8,9) anschließbar ist, mit welchem der Energiesparmodus aktivierbar und deaktivierbar ist.

6. Elektrisches Schaltgerät (1) nach Anspruch 5, wobei das Gerät (7,8,9) ein Sensor (7) ist und das zweite Eingabemittel (3) einen digitalen Eingang umfasst, an welchen der Sensor (7) anschließbar ist.

7. Elektrisches Schaltgerät (1) nach einem der vorhergehenden Ansprüche, wobei das elektrische Schaltgerät (1) dazu ausgebildet ist, dass bei einem Übergang vom Betriebsmodus in den Energiesparmodus mindestens eine Komponente des elektrischen Schaltgeräts (1) oder ein mit dem elektrischen Schaltgerät (1) verbundener Verbraucher (10) abgeschaltet wird.

8. Elektrisches Schaltgerät (1) nach einem der vorhergehenden Ansprüche, wobei das elektrische Schaltgerät (1) ein Motorsteuergerät oder ein Motorstarter ist.

9. Elektrisches Schaltgerät (1) nach einem der vorhergehenden Ansprüche, wobei der Energiesparmodus mindestens zwei Energiesparvarianten umfasst, welche jeweils mittels des ersten und zweiten Eingabemittels (3) aktivierbar und deaktivierbar sind.

10. Elektrisches Schaltgerät (1) nach Anspruch 8, wobei die mindestens zwei Energiesparvarianten kommunikationsunabhängig im elektrischen Schaltgerät (1) implementiert sind.

11. Elektrisches Schaltgerät (1) nach einem der vorhergehenden Ansprüche, wobei das elektrische Schaltgerät (1) eine Verarbeitungseinheit (11) umfasst, welche dazu ausgebildet ist, Steuerkommandos des ersten und zweiten Eingabemittels (2,3) zu verarbeiten und das elektrische Schaltgerät (1) innerhalb des Betriebsmodus und des Energiesparmodus zu steuern.

12. Elektrisches Schaltgerät (1) nach Anspruch 11, wobei die Verarbeitungseinheit (11) derart ausgebildet ist, dass bei einem Deaktivieren des Energiesparmodus automatisch der Betriebsmodus herbeigeführt wird.

13. Elektrisches Schaltgerät (1) nach einem der vorhergehenden Ansprüche, wobei mittels des ersten und zweiten Eingabemittels (2,3) mindestens ein Messwert des elektrischen Schaltgerätes (1) auslesbar ist.

14. Steuersystem mit einem elektrischen Schaltgerät (1) nach einem der vorhergehenden Ansprüche und einer Steuerung (4), wobei die Steuerung (4) mit dem ersten Eingabemittel verbunden ist und mittels der Steuerung (4) sowohl der Betriebsmodus als auch der Energiesparmodus aktivierbar und deaktivierbar ist.
